# FASCICULE DE BREVET EUROPEEN

(11) **EP 2 826 005 B1**
(45) Date de publication et mention de la délivrance du brevet: **24.04.2019**
(21) Numéro de dépôt: 13706616.3
(22) Date de dépôt: 01.02.2013
(51) Int. Cl.: G06F 21/31, G06F 21/62, H04L 29/06, G06Q 20/32, G06Q 20/40

(54) **SECURISATION D'UNE TRANSMISSION DE DONNEES**
SICHERUNG EINER DATENÜBERTRAGUNG
SECURING A DATA TRANSMISSION

(30) Priorité: 16.02.2012 FR 1251438; 28.09.2012 FR 1259235
(43) Date de publication de la demande: 21.01.2015
(73) Titulaire: Orange, 75015 Paris (FR); Idemia Identity & Security France, 92400 Courbevoie (FR)
(72) Inventeur: GENESTIER, Philippe, 38570 Hurtieres (FR); MOREAU, Jérôme, 75013 Paris (FR); GONCALVES, Louis-Philippe, 92130 Issy-les-Moulineaux (FR); BENTEO, Bruno, 92130 Issy-les-Moulineaux (FR)
(74) Mandataire: Cabinet Plasseraud
(86) Numéro de dépôt international: PCT/FR2013/050218
(87) Numéro de publication internationale: WO 2013/121127

(56) Documents cités:
- FR-A1- 2 987 529
- US-A1- 2002 053 035
- US-A1- 2005 235 148
- US-A1- 2006 191 995
- "Secure Authentication for Mobile Internet Services", , 31 décembre 2011 (2011-12-31), XP055043212, Extrait de l'Internet: URL:http://www.idc-informatique.fr/SecureA uthenticationFinal.pdf?PHPSESSID=03ef7d91d 6629f98d30195f412fada93 [extrait le 2012-11-06]
- KHACHTCHANSKI V I ET AL: "Universal SIM toolkit-based client for mobile authorization system", INTERNATIONAL CONFERENCE ON INFORMATION INTEGRATION AND WEB-BASED APPLICATIONS AND SERVICES, XX, XX, 10 septembre 2001 (2001-09-10), pages 337-344, XP002282125,

## Description

La présente invention concerne une sécurisation d'une transmission de données, par vérification d'identité d'un utilisateur, notamment pour l'accès à un service.

Le service précité peut viser par exemple l'accès à des données bancaires, ou à des données d'un dossier médical, ou autre. Généralement, l'accès est autorisé après vérification d'un support comprenant par exemple un processeur de sécurité, tel une carte à puce (comme une carte bancaire par exemple). Néanmoins, la vérification du support nécessite un lecteur du support à chaque demande d'accès au service. Par exemple, la carte SESAM-Vitale (définissant des droits pour l'assurance maladie en France) nécessite un lecteur (par exemple sous la forme d'une borne de lecture reliée à un central) pour qu'un utilisateur puisse consulter ses droits d'accès aux soins, ou mettre à jour le dossier médical du porteur de la carte.

Malgré les efforts réalisés pour déployer ces bornes de lecture, elles ne sont pas toujours facilement accessibles, notamment en cas d'urgence ou en situation de mobilité.

Il convient de noter aussi un déploiement de lecteurs auprès des professionnels de santé pour consulter le dossier médical d'un patient pendant une consultation. De même, les professionnels de santé ont eux-mêmes une autre carte professionnelle en France (dite CPS pour « Carte de Professionnel de Santé ») dont la lecture nécessite l'utilisation d'un autre lecteur.

De fait, une telle organisation duplique les lecteurs de cartes dont doivent disposer les intervenants de santé dans leur environnement de travail. De plus, elle ne permet pas les usages en situation de mobilité ou l'utilisation de terminaux ne disposant pas d'interface de lecture de cartes.

Le document US2002/053035 divulgue une authentification forte d'un utilisateur basée sur trois phases, l'enregistrement, l'enrôlement et l'authentification.

La présente invention vient améliorer la situation. Elle propose à cet effet un procédé pour vérifier une identité d'un utilisateur, comportant :
- une étape préalable d'enrôlement d'un terminal de l'utilisateur, comprenant :
   une lecture d'un composant de sécurité d'un support d'identité de l'utilisateur afin de fournir une donnée d'identité authentique de l'utilisateur portée par le support d'identité, et
      une transformation de la donnée d'identité authentique pour obtenir une identité dérivée, l'identité dérivée étant déterminée par une combinaison entre :
      - la donnée d'identité authentique de l'utilisateur, et
      - une donnée du terminal, permettant d'identifier le terminal ;
   un stockage de l'identité dérivée dans des moyens de stockage du terminal, en correspondance avec une donnée propre à l'utilisateur, et
   - une étape courante, mise en oeuvre à chaque vérification de l'identité de l'utilisateur auprès du terminal, comprenant une authentification forte basée sur l'identité dérivée stockée et sur la donnée propre à l'utilisateur stockée,
   l'identité dérivée, stockée dans les moyens de stockage du terminal, étant transmise du terminal vers une entité de vérification distante du terminal, et vérifiée par ladite entité,
   l'identité dérivée stockée dans le terminal étant transmise à l'entité distante de vérification si une concordance entre la donnée propre à l'utilisateur stockée et une donnée propre à l'utilisateur saisie par l'utilisateur au moyen du terminal est vérifiée.

On entend par « donnée d'identité authentique de l'utilisateur », un élément d'information sur l'identité de l'utilisateur portée par un support d'identité. Elle peut être par exemple issue d'une carte personnelle portant un processeur de sécurité (par exemple une carte bancaire, ou plus généralement une carte à puce donnant accès à des droits telle que par exemple une carte SESAM-Vitale ouvrant, en France, droit à des soins de santé). En variante, il peut s'agir d'une pièce d'identité (passeport, éventuellement biométrique, ou autre). L'identité authentique de l'utilisateur peut être une identité régalienne de l'utilisateur. Comme on le verra dans un exemple de réalisation décrit plus loin, il est préférable (mais optionnel) qu'un lecteur de cette carte à puce ou de cette pièce d'identité (borne ou terminal de lecture) relève, vérifie et communique l'information de l'identité de l'utilisateur que comporte la carte ou la pièce d'identité.

Une authentification forte, du type précité, garantit, comme on le verra plus loin, la robustesse dans la vérification d'identité de l'utilisateur.

Dans une réalisation, l'étape préalable d'enrôlement comporte une association entre :
- la donnée d'identité authentique de l'utilisateur, et
- une donnée de terminal,
ladite association étant mémorisée avec des données de contact du terminal via un réseau auquel est connecté le terminal.

En particulier, cette association peut être, dans une réalisation, mémorisée avec des données de contact du terminal via un réseau auquel est connecté le terminal.

Dans un exemple de réalisation, l'étape de vérification courante peut s'appuyer sur une vérification basée sur une comparaison d'une donnée saisie par l'utilisateur avec la donnée propre à l'utilisateur, puis, en cas de succès dans cette vérification, sur une vérification de l'identité dérivée grâce à l'enrôlement préalable du terminal.

Ainsi, dans une telle réalisation, l'étape courante de vérification d'identité de l'utilisateur, comprend par exemple :
* à partir des données de contact du terminal via un réseau auquel le terminal est connecté, un contact du terminal via ce réseau pour déclencher auprès du terminal une interrogation de l'utilisateur pour demander à l'utilisateur de saisir une donnée propre à l'utilisateur,
* une vérification par le terminal de la donnée saisie,
* et, la vérification de la donnée propre à l'utilisateur saisie étant positive, une vérification de l'identité dérivée,
* et, la vérification de l'identité dérivée étant positive, une validation de la vérification d'identité de l'utilisateur.

On entend par « donnée de terminal » tout type de donnée permettant d'identifier le terminal. Par exemple, dans le cas où le terminal est équipé d'un élément de sécurité tel que par exemple une carte SIM (pour « Subscriber Identity Module »), cette donnée peut être un identifiant de la carte SIM.

Par ailleurs, on entend par « données de contact du terminal » des données permettant de joindre le terminal via le réseau précité. Il peut tout simplement s'agir du numéro de téléphone (MSISDN, Mobile Station International Subscriber Directory Number, notamment) attribué au terminal dans le cas où ce dernier est un terminal téléphonique (terminal téléphonique mobile, smartphone, tablette ou autre). Il peut toutefois s'agir, en variante, d'une adresse IP par exemple pour un équipement connecté via un réseau IP (Internet Protocol), ou encore une adresse de courriel (« email »).

On relèvera que, dans le cas où les données de contact n'ont pas vocation à changer, par exemple dans le cas d'un numéro de téléphone du terminal, les « données de contact » peuvent désigner le terminal et peuvent correspondre simplement à la « donnée de terminal » précitée.

On entend par identité « dérivée » une donnée d'identité résultant de toute transformation de l'information d'identité portée par le support initialement utilisé pour produire l'identité de l'utilisateur (par exemple son identité régalienne), par exemple une transformation par une fonction de hachage (par exemple non interprétable par des tiers), ou autre.

On entend par « donnée propre à l'utilisateur » par exemple un code personnel d'identification (ou code « PIN »), ou encore une donnée d'identification biométrique (reconnaissance vocale ou d'empreinte digitale, ou d'iris, etc.), ou toute autre information permettant une identification de l'utilisateur par une interface homme/machine du terminal.

Ainsi, une mise en oeuvre possible de la présente invention, à titre de mode de réalisation, peut consister en un procédé pour vérifier une identité d'un utilisateur, comportant une étape préalable d'enrôlement d'un terminal de l'utilisateur, comprenant :
* une association entre :
   - une donnée d'information authentique de l'identité de l'utilisateur, et
   - une donnée de terminal, ce terminal étant à disposition de l'utilisateur et communiquant via un réseau,
   cette association étant mémorisée avec des données de contact du terminal via le réseau,
* une détermination d'une identité dérivée au moins de ladite information, et un stockage de ladite identité dérivée dans des moyens de stockage du terminal, en correspondance avec une donnée propre à l'utilisateur, en vue d'une authentification forte, ultérieure, basée à la fois sur la donnée propre à l'utilisateur et sur l'identité dérivée.

Par exemple, dans une forme de réalisation simple, la donnée précitée de terminal peut correspondre directement aux données de contact précitées du terminal.

Le procédé peut alors comporter ensuite une étape courante de vérification d'identité de l'utilisateur, comprenant :
* à partir des données de contact du terminal, un contact du terminal via le réseau pour déclencher auprès du terminal une interrogation de l'utilisateur pour demander à l'utilisateur de saisir ladite donnée propre à l'utilisateur, ainsi qu'une vérification de ladite donnée propre à l'utilisateur auprès du terminal,
* la vérification de la donnée propre à l'utilisateur étant positive, une vérification de l'identité dérivée,
* et, la vérification de l'identité dérivée étant positive, une validation de la vérification d'identité de l'utilisateur.

De manière générale, la présente invention permet avantageusement de déporter la fonction d'authentification de l'identité de l'utilisateur (habituellement à partir d'une carte bancaire, d'une carte SESAM-Vitale ou autre) vers son terminal, et ce grâce au stockage de l'identité dérivée auprès du terminal et d'une authentification forte basée à la fois sur la vérification du code de l'utilisateur et sur la vérification de cette identité dérivée. La mise en oeuvre de la présente invention rend possible alors l'utilisation d'un simple terminal communicant (téléphone mobile, Smartphone, tablette, ou autre) pour accéder à un ou plusieurs services distincts nécessitant une sécurisation de transmission de données (données de dossier médical, données bancaires, ou autres).

Par exemple, la validité de la vérification de l'identité de l'utilisateur à l'issue de l'étape courante précitée, peut conditionner la délivrance d'une clé de session ou de chiffrement pour une transmission sécurisée ultérieure de données, dans le cadre d'un service notamment. Par exemple, il peut s'agir d'une clé diversifiée à chaque autorisation d'accès au service, après vérification de l'identité de l'utilisateur au sens de l'étape courante précitée.

Dans un mode de réalisation, l'identité dérivée est stockée dans des moyens de stockage dont l'accès est sécurisé, typiquement dans des moyens de stockage d'un élément de sécurité du terminal, comme par exemple des moyens de stockage de la carte SIM.

La mémorisation d'association peut être mise en oeuvre auprès d'un module d'association, distant du terminal (par exemple sur un serveur distant d'une plateforme de service). Ainsi, dans une telle réalisation, ce module d'association peut déterminer l'identité dérivée (par exemple en calculant un hachage de l'information d'identité d'origine) et communiquer cette identité dérivée au terminal.

Dans une réalisation, l'identité dérivée peut être transmise au terminal par une technique de type « OTA » pour « Over-The-Air » conjointement avec des données d'une application s'exécutant auprès du terminal au moins pour commander le stockage de l'identité dérivée. Ainsi, l'application qui s'installe sur le terminal peut, lorsqu'elle est exécutée, conduire :
- au stockage de l'identité dérivée auprès du terminal,
- à l'animation d'une interface homme/machine pour demander à l'utilisateur de saisir une donnée de l'utilisateur, qui lui est propre, pour une authentification forte future,
- ultérieurement, pendant une étape courante, demander à l'utilisateur de saisir sa donnée propre, vérifier cette donnée auprès du terminal, et par exemple transmettre l'identité dérivée à un module distant (pour vérification auprès de ce module distant), si la donnée saisie est valide.

Ainsi, pendant l'étape courante précitée, l'identité dérivée peut être transmise du terminal vers une entité de vérification, distante du terminal, la vérification de l'identité dérivée étant validée auprès de ladite entité distante si en outre la donnée propre à l'utilisateur a été vérifiée avec succès auprès du terminal. Ainsi, la vérification auprès de cette entité se base sur une authentification forte, à la fois sur la donnée d'utilisateur et sur l'identité dérivée.

Avantageusement, cette entité distante peut comporter au moins un module d'authentification, coopérant avec au moins ledit module d'association pour contrôler l'identité dérivée reçue du terminal pendant l'étape courante.

Pendant l'étape préalable d'enrôlement du terminal, l'identité dérivée peut être déterminée auprès du module d'association, puis transmise au terminal via par exemple la plateforme d'un opérateur du réseau précité.

Initialement, la donnée d'identité authentique de l'utilisateur peut être fournie par lecture d'un composant de sécurité (de type processeur de sécurité par exemple) d'un support à disposition de l'utilisateur (une carte à puce, comme une carte bancaire, une carte SESAM-Vitale, ou autres). Ainsi, la validité de l'information d'identité que porte la carte peut être assurée par le lecteur et éventuellement par un serveur de vérification distant, avant de procéder à son association avec une donnée de terminal.

Comme indiqué précédemment, dans une réalisation à titre d'exemple, le terminal peut être un terminal de télécommunication et les données de contact du terminal comportent alors un numéro d'appel du terminal via le réseau précité.

Ainsi, dans une réalisation particulière,
- pendant ladite étape préalable :
   * le terminal transmet à un module d'association, distant du terminal, une donnée de terminal avec la donnée d'identité authentique de l'utilisateur,
   * le module d'association détermine une identité dérivée, et communique ladite identité dérivée au terminal,
   * sur réception de l'identité dérivée, le terminal exécute une application :
      - d'enregistrement de l'identité dérivée et
      - de présentation d'une interface à l'utilisateur, pour l'enregistrement d'une donnée propre à l'utilisateur,
- pendant ladite étape courante :
   * sur un équipement connecté pour une transmission sécurisée de données, l'équipement demande à l'utilisateur une donnée de contact du terminal via une interface homme/machine de l'équipement connecté, et l'équipement transmet ladite donnée de contact à une entité de vérification, distante du terminal,
   * l'entité de vérification distante contacte le terminal pour lancer une application auprès du terminal, déclenchant les opérations :
      - demander à l'utilisateur de saisir la donnée propre à l'utilisateur via une interface homme/machine du terminal, et
      - la vérification de la donnée propre à l'utilisateur étant positive, transmettre l'identité dérivée depuis le terminal vers l'entité de vérification,
   * en cas de succès dans une vérification de l'identité dérivée auprès de l'entité de vérification, l'entité de vérification valide la vérification d'identité de l'utilisateur pour autoriser une transmission de données via l'équipement connecté.

La présentation précitée d'une interface à l'utilisateur, pour la saisie de la donnée propre à l'utilisateur, peut consister par exemple à présenter un code que doit retenir l'utilisateur, ou consister à demander à l'utilisateur d'entrer un code personnel, ou encore faire saisir un paramètre biométrique.

L'équipement connecté peut par exemple être un ordinateur, une tablette, ou autre, relié à une plateforme de service via un réseau étendu et sollicitant l'accès au service, ou peut être le terminal lui-même. Ainsi, dans l'évolution de l'interaction entre l'équipement et une plateforme de service, il est demandé à l'utilisateur, à une étape, d'entrer le numéro de téléphone de son terminal. La plateforme de service contacte alors le terminal pour lancer l'authentification forte (vérification par exemple du code auprès du terminal, puis de l'identité dérivée).

Préalablement, pour vérifier l'information initiale d'identité de l'utilisateur, il peut être prévu, pendant l'étape préalable précitée, que :
* le module d'association vérifie ladite information d'identité auprès d'un module de gestion d'identité (par exemple un serveur de gestion des cartes SESAM-Vitale),
* et en cas de vérification positive, le module d'association détermine une identité dérivée, et communique ladite identité dérivée au terminal.

Dans une réalisation, un identifiant est transmis avec une donnée de contact du terminal via un réseau à une plateforme de service. Ainsi, si la vérification d'identité est positive à l'étape courante, l'utilisateur est autorisé à accéder à des données d'informations, fonction dudit identifiant.

Il peut être avantageux, notamment dans une application détaillée ci-après, de prévoir que le terminal reçoive, par interaction avec un objet communiquant, une donnée d'accès à un service encodant cet identifiant.

Cet objet communiquant peut être un deuxième terminal à disposition d'un deuxième utilisateur, et apte à communiquer avec le premier terminal enrôlé au cours de l'étape préalable.

Par ailleurs, les données d'informations peuvent comportent au moins des données propres à un utilisateur de l'objet communiquant précité.

Dans une réalisation, l'identifiant peut être transmis à une plateforme de service et cette plateforme de service vérifie l'identifiant et autorise un accès aux données d'informations si la vérification de l'identifiant est positive.

Une telle réalisation trouve une application avantageuse notamment dans l'assistance à une personne nécessitant des soins d'urgence, auquel cas l'objet communiquant peut être un deuxième terminal à disposition d'une deuxième personne (nécessitant des soins d'urgence), et apte à communiquer avec le premier terminal enrôlé au cours de ladite étape préalable (à disposition par exemple d'un urgentiste).

Dans cette réalisation, le premier terminal peut recevoir la donnée de service du deuxième terminal par communication en champ proche, le deuxième terminal appartenant à une personne nécessitant des soins d'urgence (et n'étant par exemple pas en mesure de s'identifier avec son téléphone ou plus généralement d'utiliser son téléphone pour communiquer la donnée de service précitée), et le premier terminal appartenant à un urgentiste.

Dans une telle application, les données d'informations fonctions de l'identifiant de service peuvent comporter au moins des données médicales de la personne nécessitant des soins d'urgence. Ainsi, l'identifiant relatif à un service peut alors être transmis à une plateforme de service. Cette plateforme de service vérifie l'identifiant et n'autorise un envoi des données d'informations que si la vérification de l'identifiant de service est positive.

La présente invention vise aussi un procédé de sécurisation d'une transmission de données, entre un équipement et une plateforme de service, comportant une vérification d'identité d'un utilisateur de l'équipement selon l'étape courante du procédé ci-avant, le procédé de sécurisation comportant :
- une transmission des données de contact du terminal à la plateforme de service,
- la mise en oeuvre de l'étape courante de vérification d'identité à partir du terminal de l'utilisateur, et
- la vérification d'identité étant positive, une étape pour autoriser une transmission de données entre l'équipement et la plateforme de service.

L'équipement peut être le terminal lui-même. Il peut s'agir par exemple d'un ordinateur connecté à un réseau étendu tel l'Internet. Par exemple dans ce cas, l'adresse IP de l'ordinateur peut former des données de contact du terminal.

Par ailleurs, la transmission de données entre l'équipement et la plateforme de service peut être chiffrée, assortie de l'allocation d'une clé de session ou de chiffrement dans la communication entre l'équipement et la plateforme.

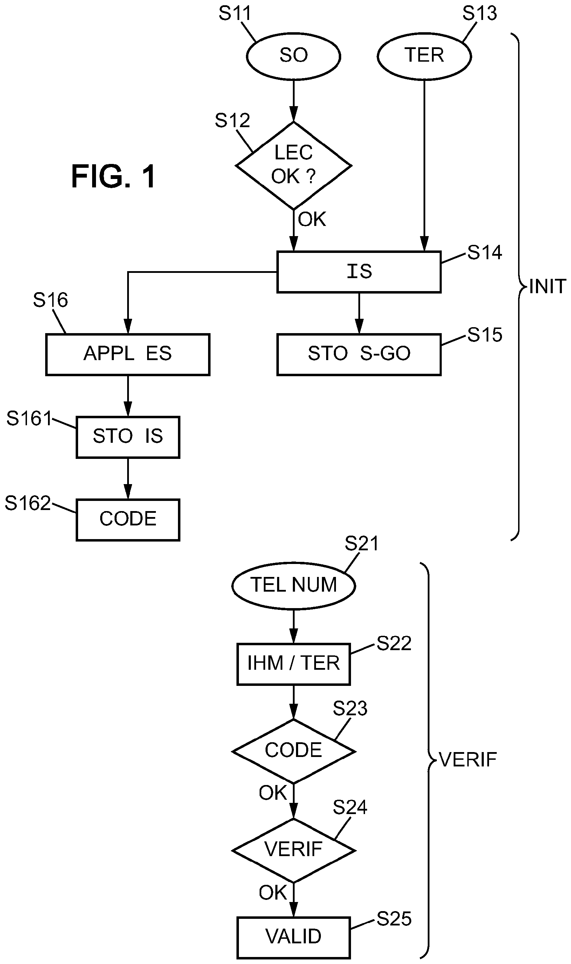

La présente invention vise aussi un programme informatique comportant des instructions pour la mise en oeuvre du procédé ci-avant, lorsque ce programme est exécuté par un processeur. A ce titre, la figure 1 commentée ci-après peut représenter l'organigramme de l'algorithme général d'un exemple de réalisation de ce programme.

La présente invention vise aussi un terminal configuré pour la mise en oeuvre d'un procédé de vérification d'une identité d'un utilisateur, comportant :
- des moyens de stockage pour stocker une identité dérivée d'au moins une donnée d'identité authentique de l'utilisateur en correspondance avec une donnée propre à l'utilisateur et
- des instructions de programme informatique pour, lorsque lesdites instructions sont exécutées par un processeur du terminal, sur sollicitation par une entité distante de vérification de ladite identité dérivée:
   - animer une interface homme/machine pour demander à l'utilisateur de saisir ladite donnée propre à l'utilisateur, puis vérifier une concordance de la donnée propre saisie avec la donnée propre stockée,
   - transmettre l'identité dérivée stockée à l'entité distante pour vérification.

La présente invention vise aussi une entité de vérification configurée pour la mise en oeuvre au moins de l'étape courante du procédé ci-avant, comportant des moyens :
- de contact du terminal, via le réseau précité pour déclencher auprès du terminal une interrogation de l'utilisateur,
- de réception et de vérification de l'identité dérivée, reçue du terminal, et
- les vérifications de l'identité dérivée et de la donnée propre à l'utilisateur étant positives, de validation de vérification d'identité de l'utilisateur.

Bien entendu, la présente invention vise aussi un système comportant au moins le terminal et l'entité de vérification (distante du terminal par exemple), et optionnellement le module d'association précité.

On indique en effet que l'entité de vérification et le module d'association peuvent être deux entités séparées (par exemple deux serveurs distants l'un de l'autre), ou qu'en variante le module d'association peut être intégré à l'entité de vérification.

D'autres caractéristiques et avantages de l'invention apparaîtront à l'examen de la description détaillée ci-après, et des dessins annexés sur lesquels :
- la figure 1 illustre schématiquement les principales étapes du procédé au sens de l'invention,
- la figure 2 illustre un système pour la mise en oeuvre de l'étape préalable d'enrôlement du terminal, et
- la figure 3 illustre un système pour la mise en oeuvre de l'étape courante de vérification d'identité,
- la figure 4 illustre un mode de réalisation dans lequel un identifiant relatif à un service est transmis par le terminal, dans un exemple de réalisation, pour recevoir des données relatives au service.

On a représenté sur la figure 1 un exemple de réalisation de la succession des étapes d'un procédé au sens de l'invention comportant une phase initiale INIT, d'enrôlement préalable d'un terminal, et une étape courante de vérification VERIF d'identité de l'utilisateur.

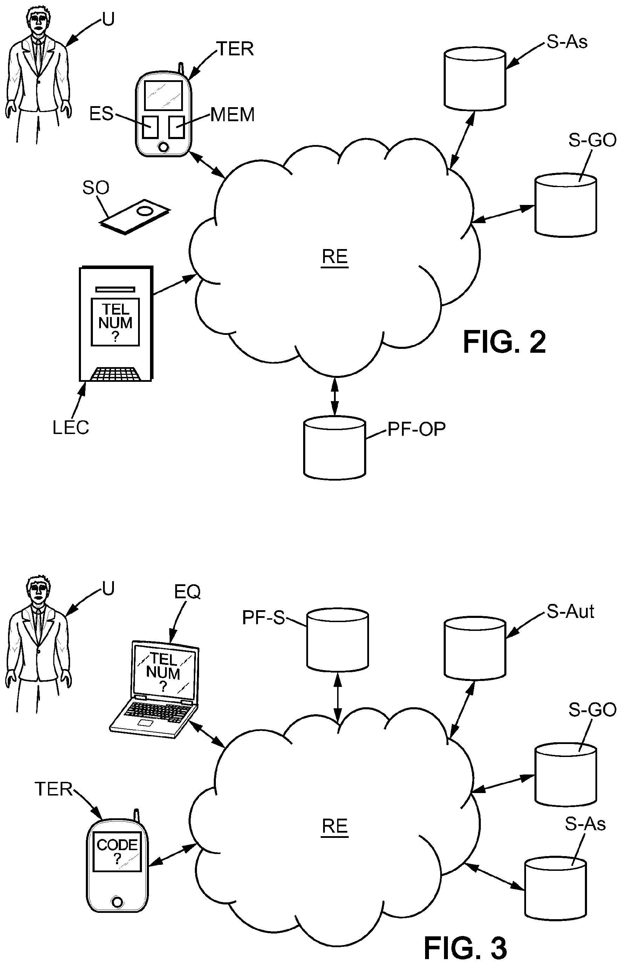

Dans cet exemple de réalisation, pendant la phase préalable INIT, à l'étape S13, l'utilisateur d'un terminal TER (représenté sur les figures 2 et 3) transmet à un module d'association S-As, distant du terminal, une donnée de terminal, par exemple un numéro d'appel du terminal, avec, à l'étape S11, une information d'identité de l'utilisateur par exemple contenue dans un support d'origine SO. A cet effet, l'utilisateur peut mettre en oeuvre une borne de lecture du support d'origine. A l'étape S12, le module d'association (par exemple un serveur d'association S-As représenté sur la figure 2) peut vérifier l'information d'identité de l'utilisateur reçue de la borne de lecture auprès d'un module de gestion d'identité (par exemple un serveur S-GO de gestion des supports SO). En cas de vérification positive (flèche OK en sortie du test S12), le module d'association détermine une identité dérivée IS, à l'étape S14, et communique cette identité dérivée au terminal à l'étape S16, pour démarrer une application auprès du terminal (par exemple une application de type « cardlet » sur la carte SIM du terminal), notamment pour enregistrer à l'étape S161 l'identité dérivée dans une mémoire de l'élément de sécurité du terminal (par exemple sa carte SIM). Les données de cette application peuvent être transmises par une technique de type OTA (pour « Over-the-Air »), ou par téléchargement à partir d'un lien URL, ou autre. L'exécution de cette application sur le terminal peut en outre consister à présenter à l'étape S161 une interface homme/machine à l'utilisateur, pour l'enregistrement d'une donnée propre à l'utilisateur, par exemple sous forme de code propre à l'utilisateur. En outre, à l'étape S15, l'information d'association entre l'identité dérivée IS et l'identité d'origine peut être transmise à une plateforme pour y être mémorisée, cette plateforme pouvant être gérée par exemple par le module de gestion du support d'origine S-GO.

On décrit maintenant des exemples de réalisation plus détaillés, en référence à la figure 2 représentant différentes entités intervenant dans la première phase d'initialisation INIT, ces différentes entités étant reliées par un réseau étendu RE (par exemple l'internet).

La première phase INIT est mise en oeuvre pour la génération d'une identité secondaire IS :
- dérivée d'une identité d'origine IO, portée par exemple par un support d'origine SO, et,
- destinée à être mise en place dans un élément de sécurité ES du terminal TER (par exemple stockée dans une mémoire d'un composant de sécurité du terminal mobile communiquant, tel qu'une carte SIM (pour « Subscriber Identity Module »)).

L'association des identités s'effectue en présence des deux supports :
- le support d'identité d'origine SO, et
- l'élément de sécurité ES du terminal, à associer.

A titre d'exemple, le support d'origine SO peut être avantageusement, dans le cadre de la transmission sécurisée d'informations médicales, une carte de type SESAM-VITALE ou carte CPS (pour « Carte de Professionnel de Santé »). Plus généralement toutefois, le support d'origine peut être un document d'identité, un document de gestion de droits d'usage ou un élément de sécurité portant des informations vérifiables concernant son porteur. Typiquement, la carte SESAM-VITALE ou la carte CPS disposent de plusieurs éléments liés à l'identité du porteur et à des droits associés.

L'association des deux supports se déroule comme suit, dans un exemple de réalisation possible.

A l'étape S11 précitée, l'utilisateur U se connecte à un service d'association (par exemple une application web hébergée), auprès d'un serveur d'association S-As sur lequel il s'identifie/authentifie à l'aide du support d'identité d'origine SO.

A cet effet, l'utilisateur U peut utiliser un lecteur LEC du support d'origine SO (soit intégré à un équipement EQ de type ordinateur, soit relié à cet équipement EQ via un port USB), ou encore une borne de lecture de carte santé, un lecteur de carte bancaire, ou autre. Cependant, il doit disposer aussi du terminal communicant TER (téléphone, Smartphone, tablette, ou autre) disposant d'un élément de sécurité ES (carte SIM ou autre), lequel est identifié par la suite comme destinataire futur des données d'identité secondaire IS.

Le serveur d'association S-As lit ou obtient d'un lecteur les données du support d'origine, incluant les données relatives à l'identité d'origine IO du porteur du support d'origine SO, prévues pour le transfert et la génération ultérieurs d'une identité dérivée IS. Il convient toutefois d'indiquer ici qu'une variante de réalisation consiste à préinstaller une application sur le terminal TER, capable de générer elle-même les données d'identité secondaire IS, par exemple à la suite d'une lecture en champ proche (ou « NFC ») de la carte SO par le terminal. En effet, il peut être prévu un transfert en proximité (via un lecteur, une borne, ou un objet) activant une transaction de type sans contact ISO14443 ou NFC (en « champ proche ») par exemple.

A l'étape S12 précitée, le serveur d'association S-As peut avantageusement interroger un serveur de gestion S-GO du support d'origine SO pour vérifier notamment sa validité. Par exemple, les données issues du support d'origine peuvent être transmises par le lecteur précité LEC, par exemple sur requête du serveur d'association S-As, vers le serveur de gestion S-GO pour validation des données et des droits (avantageusement en vue d'une lutte contre la fraude et pour une vérification d'intégrité des données).

Une fois cette vérification effectuée, à l'étape S13, le serveur d'association S-As demande, via une interface du lecteur LEC, la saisie d'une donnée de terminal (par exemple le numéro de téléphone, l'identifiant de la carte SIM, ou autre) permettant une identification ultérieure du terminal TER et son association au support d'origine SO.

Si le lecteur LEC ne dispose pas d'interface de saisie, l'interface de saisie de l'équipement EQ peut être utilisée. Il peut être prévu au cours de cette même opération la saisie et le stockage dans une mémoire du terminal TER de données spécifiques de l'utilisateur U, lequel peut alors disposer de plusieurs moyens d'auto-identification notamment auprès de son terminal personnel TER.

Dans une réalisation possible, afin de vérifier en outre qu'aucune erreur n'a été effectuée dans la saisie du numéro de terminal TER, un message sécurisé peut être communiqué vers le numéro de téléphone qu'a saisi l'utilisateur, ce message contenant par exemple une demande de vérification par l'utilisateur et de renvoi d'un accusé de réception (par exemple le clic d'un choix « ok » dans une fenêtre « pop-up », effectué par l'utilisateur via l'interface homme/machine du terminal TER).

Ensuite, à l'étape S14, à partir des deux informations reçues suivantes :
- la donnée de terminal (carte SIM, numéro de téléphone du terminal TER, ou autre),
- et les données issues du support d'origine SO, incluant l'identité d'origine IO,
le serveur d'association S-As génère au moins une identité dérivée IS (et la stocke en mémoire). Cette identité dérivée IS peut être une transformation et/ou combinaison des deux informations précédentes, ou simplement une transformation de l'identité d'origine IO issue du support SO (par exemple par une fonction de hachage, par chiffrement ou cryptage, ou autre).

Cette identité dérivée IS peut se présenter sous la forme d'un code alphanumérique sans signification particulière afin de garantir un anonymat et optimiser l'entropie de la solution de sécurité.

Dans une forme de réalisation, le serveur d'association S-As génère en outre une donnée propre à l'utilisateur, sous forme de code personnel, propre à l'utilisateur (qui peut par exemple être redéfini ultérieurement par une saisie personnelle de l'utilisateur). Dans une variante de réalisation, la donnée propre à l'utilisateur est définie, choisie et saisie par l'utilisateur.

Cette identité dérivée et cette donnée propre à l'utilisateur sont stockés ultérieurement (à l'étape S16 détaillée ci-après) dans le terminal TER en référence à une application de type « cardlet » personnalisée (« applet » java exécutée depuis une carte), installée dans le terminal. A ce titre, la présente invention vise aussi un terminal comportant une mémoire MEM stockant notamment des instructions pour exécuter une telle application. Cette application prend en charge ensuite les échanges du terminal TER avec une entité distante de vérification d'identité, pour des services ultérieurs, comme décrit plus loin.

A l'étape S15, l'identité dérivée est également envoyée au serveur de gestion du support d'origine S-GO qui stocke alors en mémoire en association l'identité dérivée et l'identité authentique de l'utilisateur, afin de pouvoir retrouver l'identité d'origine à partir de l'identité dérivée.

L'étape S16 vise, suite à l'installation de l'application « cardlet » précitée dans le terminal TER, à enregistrer l'identité dérivée de cette application dans une mémoire sécurisée de l'élément de sécurité ES. Dans une réalisation, l'identité dérivée est envoyée du serveur d'association S-As vers par exemple une plateforme d'opérateur PF-OP du réseau de télécommunication qu'utilise le terminal, cette plateforme PF-OP qui elle-même est en charge de leur envoi ensuite vers le terminal TER de l'utilisateur. Par exemple, cette plateforme PF-OP envoie un message sécurisé au terminal de l'utilisateur, lequel contient par exemple un lien hypertexte vers l'application et l'identité dérivée, à télécharger dans l'élément de sécurité ES. Lorsque l'utilisateur clique sur ce lien, le téléchargement et l'installation de l'application « cardlet » par exemple dans la carte SIM du terminal peuvent commencer. Il se déroule ensuite les étapes de stockage de l'identité dérivée IS dans une mémoire de l'élément de sécurité ES du terminal et de présentation d'une interface à l'utilisateur par exemple pour visualiser un code défini par la plateforme d'association et qu'il peut modifier pour le personnaliser.

En référence à nouveau à la figure 1, on décrit maintenant un exemple de réalisation des principales étapes de la phase courante VERIF d'identification de l'utilisateur par son terminal.

Sur un équipement EQ connecté pour une transmission sécurisée de données, l'équipement EQ demande à l'utilisateur le numéro d'appel du terminal via une interface homme/machine de l'équipement connecté, et l'équipement transmet ce numéro d'appel à une entité de vérification distante, à l'étape S21.

Cette entité distante contacte le terminal pour lancer une application, à l'étape S22, auprès du terminal, déclenchant les opérations :
- demander à l'utilisateur d'entrer le code personnel via une interface homme/machine du terminal,
- et, en cas de succès dans une vérification du code à l'étape S23 par vérification de concordance entre le code personnel saisi et le code personnel stocké dans les moyens de stockage du terminal ou de l'élément de sécurité de ce terminal, transmettre l'identité dérivée depuis le terminal vers l'entité de vérification.

Comme on le verra dans un exemple de réalisation décrit plus loin en référence à la figure 3, l'entité de vérification peut comporter plusieurs modules ou serveurs distants les uns des autres (incluant dans un mode de réalisation le module d'association S-As de la figure 2).

En cas de succès dans une vérification de l'identité dérivée auprès de l'entité de vérification à l'étape S24, l'entité de vérification valide la vérification d'identité de l'utilisateur pour autoriser une suite dans l'échange de données entre l'équipement EQ et la plateforme de service PF-S. Par exemple, la plateforme de service PF-S peut recevoir de l'entité de vérification une donnée d'état de validation de l'identité vérifiée (étape S25) et générer sur réception de cette donnée d'état une clé de session allouée à la communication avec l'équipement EQ. En complément ou en variante, pour sécuriser davantage les échanges de données entre l'équipement EQ et la plateforme PF-S, cette dernière peut générer une clé de chiffrement des données (par exemple une clé diversifiée associée au service). En effet, les données échangées après l'étape de vérification peuvent être confidentielles, et concerner par exemple des données médicales concernant l'utilisateur. On indique qu'en variante encore, la clé de chiffrement peut être générée par le serveur de gestion du support d'origine S-GO.

Ainsi, après la phase d'enrôlement d'un terminal TER sur la base d'un support d'origine SO, il est proposé l'identification/authentification d'un utilisateur U à partir de ce terminal TER pour l'accès à un service en ligne par exemple (ou à un applicatif quelconque) demandant une identification forte. On utilise préférentiellement une couche de contrôle d'accès liée à l'applicatif ou au service, et dont le rôle est d'assurer une protection des accès à l'applicatif ou au service, ainsi qu'une gestion des relations entre les différents moyens d'authentification.

En référence à la figure 3, à l'étape S21 précitée, l'utilisateur choisit l'un des terminaux dont il dispose (téléphone, tablette, ordinateur, etc.) pour communiquer avec une plateforme de service distante PF-S, ces terminaux ayant bien entendu été enrôlés lors d'une phase d'initialisation comme décrit ci-avant en référence aux figures 1 et 2.

Le terminal TER, disposant d'un élément de sécurité ES, est ici le vecteur de données d'identification/authentification, ce qui permet ainsi de ne pas transmettre d'informations sensibles via l'équipement EQ pouvant être l'objet ou directement le porteur d'un moyen d'attaque.

La plateforme de service PF-S transmet par une couche logicielle appropriée une demande de validation à un serveur d'authentification S-Aut.

Le serveur d'authentification S-Aut contacte le terminal TER pour exécuter, à l'étape S22, un applicatif protégé sur le terminal TER, cet applicatif proposant à l'utilisateur une interface de communication et de saisie de données. Plus particulièrement, le serveur d'authentification S-Aut envoie une sollicitation (message sécurisé) à l'élément de sécurité du terminal TER. Ce message est traité par l'application « cardlet » dans l'élément de sécurité ES du terminal, installée lors de la phase d'initialisation. Il est alors demandé à l'utilisateur de fournir, à l'étape S23, un vecteur d'auto-identification (par exemple le code personnel de l'utilisateur), dont la validité est vérifiée localement sur le terminal.

L'utilisateur répond via l'interface du terminal TER en fournissant l'un des vecteurs d'auto-identification (par exemple le code personnel précité) pour poursuivre les opérations d'authentification.

Si le bon vecteur a été produit par l'utilisateur U à l'étape S23, l'application dans l'élément de sécurité ES renvoie au serveur d'authentification S-Aut un compte-rendu de succès, accompagné de l'identité dérivée IS associée au service.

Le serveur d'authentification S-Aut communique ensuite l'identité dérivée au serveur d'association S-As, qui la vérifie et, en cas de validité de l'identité dérivée, coopère ensuite avec le serveur S-GO de gestion de l'identité d'origine, pour vérifier en outre, à l'étape S24, la non-répudiation de l'identité de l'utilisateur et la validité des droits qui lui sont associés. Le cas échéant, le serveur S-GO retourne la confirmation de la qualité de l'identité d'origine associée à l'utilisateur.

Cette information de validation de l'identité est ensuite remontée par le serveur d'authentification S-Aut vers la plateforme de service PF-S, préférentiellement via une couche logicielle de contrôle d'accès.

Dans le cas où l'identité initiale portée sur le support d'origine doit être partagée avec une plateforme de service, cette dernière dispose préférentiellement, sur la base des informations reçues, de l'accord de l'utilisateur et d'un moyen de récupérer cette information auprès du serveur de gestion d'identité S-GO.

Sur la base des données de validation, toutes les transactions associées à cet acte peuvent ensuite être signées par exemple par une clé diversifiée (étape S25). Chaque acte peut alors être identifié, permettant ainsi une solution d'audit et de gestion de répudiation basée sur des éléments issus de l'ensemble des parties du système.

Cette clé de signature peut être générée par la plateforme de service PF-S, ou, en variante, par le serveur de gestion du support d'origine S-GO (disposant d'outils techniques à cet effet).

Bien entendu, il est possible pour un utilisateur de se désinscrire du service et configurer son terminal à cet effet, ou encore simplement de changer de terminal et conserver l'accès au service via son nouveau terminal.

Pour une désinscription à l'initiative du gestionnaire du service d'association d'identité, l'opérateur peut arrêter les fonctionnalités d'identification du terminal ou directement les fonctionnalités opérées pendant le service. Il est préférable que l'identité dérivée et éventuellement d'autres informations de personnalisation mémorisées par le terminal soient effacées lors de cette opération.

En outre, le gestionnaire des droits peut invalider les services sans modification nécessaire des informations et applications enregistrées dans le terminal. Sur tentative de vérification d'accès par un utilisateur, les services s'avèrent alors non accessibles.

L'utilisateur peut se désinscrire lui-même d'un service ou invalider une association de son identité à un service. Dans ce cas, il peut lancer une application de désinstallation sur son terminal qui peut par exemple se dérouler comme suit :
- identification de l'utilisateur,
- vérification de la possibilité de gérer ce droit de désinscription auprès d'une plateforme,
- une fois les vérifications effectuées, désinstallation de l'application de vérification d'identité sur le terminal et effacement des références à l'utilisateur sur le ou les serveur(s) distant(s).

Le service ne dispose alors plus d'aucun lien avec l'utilisateur, les identifiants utilisés perdant leur droit d'accès au service. Si l'utilisateur souhaite réutiliser ce service, il peut bien entendu relancer l'étape d'enrôlement initiale.

L'utilisateur peut changer de support matériel. Il peut changer son support d'identité d'origine SO ou changer de terminal portant son identité mobile. Dans les deux cas, l'utilisateur peut se désinscrire par exemple du service, puis recommencer l'étape d'enrôlement de son terminal (le cas échéant son nouveau terminal et/ou, le cas échéant, avec le nouveau support d'origine).

Ainsi, la présente invention permet avantageusement de s'affranchir d'un support tel qu'une carte à puce. Elle permet, pour des applications courantes, de n'utiliser finalement qu'un terminal, notamment un terminal mobile communiquant. L'invention trouve une application avantageuse notamment pour un patient devant fournir une autorisation de transmission de données de son dossier médical à un professionnel de santé donné. Par exemple, le professionnel de santé peut indiquer via un équipement connecté EQ qu'il souhaite récupérer des données concernant Monsieur X. Un message s'affiche par exemple sur le terminal communiquant de Monsieur X en lui demandant s'il autorise une communication de ses données au Docteur Y. S'il répond « oui », il peut lui être demandé d'entrer son code personnel et en cas de succès le terminal envoie l'identité dérivée conformément à l'étape VERIF ci-avant.

Toutefois, dans certaines situations d'urgence, la vérification du code de l'utilisateur peut ne pas être nécessaire, par exemple pour télécharger sur le terminal d'un utilisateur des premières données telles que par exemple son groupe sanguin, ses principales allergies, etc.

Bien entendu, dans certains cas, un terminal peut comporter plusieurs identités dérivées, pour accéder à des services différents ou pour, par exemple, les membres d'une même famille accédant à un service (par exemple pour l'accès au soin, des enfants pouvant être « identifiés » sur le terminal d'un parent).

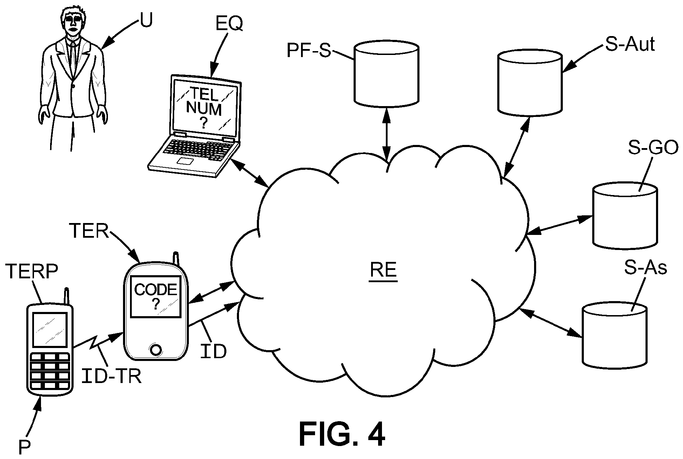

On décrit ci-après une réalisation avantageuse notamment dans le cadre de services d'urgence, en référence maintenant à la figure 4. Dans une telle réalisation, le terminal TER représenté sur la figure 4 exécute les mêmes étapes que celles décrites ci-avant, une authentification forte étant mise encore en oeuvre pour s'assurer que l'utilisateur U du terminal TER est bien titulaire préenregistré du terminal. Dans l'application décrite ci-après à titre illustratif, l'utilisateur U est un urgentiste, par exemple un professionnel de santé, et doit intervenir auprès d'une personne nécessitant des soins d'urgence. Dans l'exemple décrit, la personne nécessitant des soins d'urgence possède un deuxième terminal TERP. A titre illustratif, la personne nécessitant des soins n'est pas en mesure d'utiliser de façon autonome son terminal. L'urgentiste U utilise alors son terminal TER pour :
- obtenir un identifiant ID propre à la personne P, en utilisant le deuxième terminal TERP dans l'exemple représenté sur la figure 4,
- s'identifier ensuite auprès d'une plateforme de service PF-S, en utilisant le terminal TER, et
- transmettre l'identifiant ID propre à la personne P et obtenir en retour des données de la personne P, par exemple des données confidentielles et/ou propres à la personne, en l'occurrence des données d'informations médicales, habituellement confidentielles, de la personne P nécessitant des soins et à laquelle est associé l'identifiant ID.

A cet effet, la personne P pouvant nécessiter des soins est préenregistrée pour un service du type décrit ci-avant. Les données de la personne P précitées peuvent être stockées par exemple auprès d'un espace personnel en ligne ou directement sur un élément de sécurité tel que la carte SIM du terminal TERP (auquel cas néanmoins une plateforme de service intervient encore pour vérifier l'habilitation, à obtenir les données propres à la personne P, identifiée par l'identifiant ID, du porteur du terminal TER ayant sollicité ce service d'urgence). Ainsi, l'urgentiste U est aussi enregistré pour un service de sécurisation d'accès à de telles données. Chaque terminal TER et TERP des personnes U et P comporte une application installée par exemple sur carte SIM pour traiter les opérations décrites ci-après à titre d'exemple.

Dans le cas précité où l'urgentiste U doit accéder à des données propres à la personne P, le terminal TER de l'urgentiste U obtient une donnée d'accès à un service ID-TR, cette donnée d'accès étant propre à la personne P. Cette donnée d'accès est obtenue, dans l'exemple de la figure 4, par interaction et/ou communication avec le terminal TERP de la personne P, par exemple par communication en champ proche (NFC) entre le terminal TERP et le terminal TER. Bien entendu, d'autres réalisations sont possibles. Il peut s'agir d'une lecture de code optique (par exemple un « flash code ») sur un casque de motard ou un véhicule appartenant à la personne P. Il peut s'agir aussi d'une lecture d'étiquette NFC ou RFID prévue pour cette application.

A partir de la donnée d'accès ID-TR obtenue auprès du terminal TER, le terminal TER obtient :
- optionnellement, une adresse d'une plateforme de service d'urgence PF-S auquel l'urgentiste U peut se connecter ensuite avec son terminal TER, et
- un identifiant ID propre à la personne P, par exemple un identifiant de son terminal TERP (identifiant MSISDN par exemple) ou son numéro d'abonné, ou encore un identifiant propre au service d'urgence, via lequel la personne P est enregistrée auprès de la plateforme de service comme ayant requis le service d'urgence permettant la fourniture de données de la personne requérante.

L'identifiant et/ou l'adresse de la plateforme de service sont :
- soit encodées dans la donnée d'accès ID-TR, et dans ce cas obtenues par le terminal TER par décodage de cette donnée d'accès ID-TR ; cet encodage / décodage peut impliquer un chiffrement / déchiffrement;
- soit obtenues par le terminal TER par envoi d'une requête d'interrogation de la plateforme de service d'urgence contenant cette donnée d'accès ID-TR et obtention en retour de l'identifiant ID et/ou l'adresse de la plateforme de service.

Le traitement de la donnée d'accès ID-TR par le terminal TER permet alors au terminal TER de l'urgentiste de se connecter à la plateforme de service avec l'adresse obtenue pour :
- transmettre à la plateforme l'identifiant ID propre à la personne P, pour une vérification par la plateforme que la personne P a bien requis au préalable un tel service d'urgence et/ou est abonnée à un tel service,
- déclencher l'exécution par le terminal TER d'une vérification d'identité de l'urgentiste U par authentification forte, selon le procédé décrit plus haut,
- et, si la vérification est positive, recevoir de la plateforme des données de la personne P, par exemple informations confidentielles sur la personne P, en l'occurrence des données médicales de la personne P, à destination de l'urgentiste qui en a besoin pour de premiers secours (par exemple, dans cette application, des données médicales telles que le groupe sanguin, des allergies à certains anesthésiants, des contrindications avec d'autres traitements médicaux en cours, ou autres).

En outre, il est supposé dans cette application que la personne P nécessitant des soins n'est pas en mesure d'utiliser son terminal TERP, ni d'entrer par exemple un code d'accès pour mettre en service le terminal TERP (code PIN) et passer un appel. Toutefois, typiquement si le code PIN n'est pas entré, il est possible néanmoins de passer des appels vers des numéros d'urgence (souvent à deux ou trois chiffres), dans de nombreux terminaux. Ainsi, l'urgentiste peut saisir un numéro d'urgence sur le terminal TERP de la personne P et communiquer avec une plateforme de service d'urgence pour renseigner notamment un identifiant personnel de l'urgentiste U. La plateforme vérifie dans une base de données que la personne P est bien requérante / abonnée du service d'urgence, par exemple en fonction du numéro d'appelant du terminal TERP. La plateforme retrouve le numéro d'abonné de l'urgentiste U, à partir de son identifiant personnel et contacte l'urgentiste sur son terminal TER pour vérifier son identité par la mise en oeuvre de l'étape précitée d'authentification forte de l'urgentiste via son terminal TER. Si cette vérification d'identité est positive, alors la plateforme transmet les données médicales de la personne P à l'urgentiste.

On comprendra de ces différentes variantes que la plateforme de service, sur réception:
- d'une donnée de contact du terminal de l'urgentiste U (par exemple un numéro d'appel sur son terminal TER), et
- d'un identifiant ID propre à la personne P (par exemple un identifiant ID servant à vérifier si la personne est bien enregistrée auprès de la plateforme de service comme ayant requis ce service),

- procède à une vérification d'identité par authentification forte de l'urgentiste U via son terminal TER (préalablement enrôlé), et
- si la vérification est positive, transmet les données de la personne P au terminal de l'urgentiste (ou à tout autre objet communiquant EQ, comme indiqué précédemment).

Le principe de l'invention est généralisable à l'utilisation d'un identifiant ID, relatif à un service, mais non nécessairement propre à une personne. Cet identifiant ID est transmis avec une donnée de contact du terminal TER via le réseau auquel est connecté le terminal (typiquement à la plateforme de service PF-S), et, si la vérification d'identité de l'utilisateur U est validée ultérieurement sur le terminal TER, l'utilisateur peut recevoir alors au moins des données d'informations, fonction de l'identifiant de service ID transmis (par exemple des données médicales de la personne P sur son terminal TER, lorsque l'identifiant ID relatif au service est aussi propre à la personne). L'identifiant ID est ainsi représentatif d'un ensemble de données d'informations à transmettre et il permet donc à la plateforme de service de sélectionner, identifier, obtenir les données d'informations à transmettre au terminal TER. En outre, à une même personne P, peut être associé un ou plusieurs identifiants ID, identifiant chacun un jeu de données d'informations différent : par exemple, un jeu de données médicales, un jeu de données bancaire, etc. Ainsi différentes applications de l'invention sont envisageables selon le contenu du jeu de données d'informations transmis.

Dans une réalisation particulière, le terminal TER peut alors :
- lire l'identifiant ID par interaction avec un objet communiquant (le terminal TERP de la personne P, ou encore une étiquette RFID ou encore un flash code considéré dans ces termes génériques comme un objet communiquant), et
- transmettre l'identifiant ID, pour recevoir, suite à cette transmission et à la validation de vérification d'identité, les données d'informations précitées, fonction de l'identifiant ID.
Toutefois, comme décrit précédemment, l'identifiant ID peut être transmis directement depuis le terminal TERP de la personne P, avec par exemple une donnée d'accès à un service encodant en outre un lien vers une plateforme de service.

Ainsi, dans une réalisation particulière, le terminal TER reçoit une donnée d'accès à un service encodant l'identifiant ID, par interaction avec un objet (étiquette flash code par exemple), cet objet pouvant être un objet communiquant (tag RFID, ou terminal mobile par interaction NFC). Dans cette réalisation particulière, la donnée d'accès à un service ID-TR permet au terminal TER d'obtenir l'adresse de la plateforme de service et l'identifiant ID.

Le terminal TER transmet alors l'identifiant de service ID à la plateforme de service, pour recevoir, suite à cette transmission et en cas de vérification positive à l'étape courante de vérification d'identité, les données d'informations, fonction de l'identifiant ID transmis.

Dans l'exemple de réalisation de la figure 4, l'objet communiquant précité est un deuxième terminal TERP, apte à communiquer avec le premier terminal TER enrôlé au cours de l'étape préalable d'enrôlement. Par exemple, le premier terminal TER reçoit l'identifiant ID du deuxième terminal TERP par communication en champ proche avec le deuxième terminal, ce qui est avantageux notamment dans le cas où le deuxième terminal TERP appartient à une personne P nécessitant des soins d'urgence, n'étant pas en mesure d'utiliser son terminal TERP, et où le premier terminal TER appartient à un urgentiste U.

La lecture de la donnée d'accès à un service ID-TR sur le premier terminal TER déclenche la connexion du terminal TER de l'urgentiste à la plateforme de service, à laquelle le terminal TER transmet des données de contact du terminal TER (par exemple son numéro d'abonné) et l'identifiant ID (par exemple le numéro d'abonné du terminal TERP si les deux terminaux TER et TERP ont eu une interaction).

Lorsque l'identité de l'utilisateur du terminal TER a été vérifiée par la plateforme de service, la plateforme de service vérifie, par exemple par consultation d'un profil d'utilisateur associé à l'utilisateur authentifié (définissant une ou plusieurs catégories d'utilisateurs auxquelles l'utilisateur authentifié appartient, par exemple : professionnel de santé, sapeur-pompier, ou autres), si au moins une des catégorie d'utilisateurs définies dans le profil utilisateur est habilitée à accéder aux données d'informations identifiées par l'identifiant ID. Dans le cas où l'identifiant ID est propre à une personne P, la plateforme de service vérifie si l'utilisateur du terminal TER est habilité à accéder aux données de cette personne P.

La plateforme valide en outre dans un exemple de réalisation une non-répudiation du service par la personne P (vérification d'aucun signalement d'une perte ou d'un vol du terminal TERP, ou autre).

La plateforme de service sollicite en outre le service d'authentification pour une authentification forte de l'urgentiste U, via par exemple le serveur d'authentification S-Aut de la figure 4. A cet effet, l'urgentiste est sollicité au travers d'une demande de saisie d'informations personnelles sur son terminal mobile. Comme décrit ci-avant, des plateformes de service de mémorisation d'association S-AS et/ou de gestion de l'identité d'origine S-GO peuvent être consultées optionnellement en tant que de besoin. Si l'urgentiste présumé s'authentifie, mais que l'identité dérivée remontée à la plateforme ne correspond pas à un type d'identité habilité à accéder aux données de la personne P, l'accès lui en est refusé.

Il peut être prévu en outre que le terminal TERP de la personne P soit enrôlé préalablement pour ce service d'urgence (via son élément de sécurité, par exemple sa carte SIM). Par exemple, si l'urgentiste a été authentifié avec succès et qu'il possède l'une des identités habilitées pour accéder aux données d'informations, fonction de l'identifiant ID, la plateforme de service peut transmettre par exemple un message sécurisé (par exemple un message SMS) au terminal TERP, pour activer l'élément de sécurité du terminal TERP. Il peut par exemple s'exécuter sur le terminal TERP une routine de vérification de l'enrôlement du terminal TERP, par exemple en vérifiant un identifiant (ou un secret cryptographique) stocké dans la carte SIM. Dans une telle réalisation, à l'issue de cette vérification, une présentation des données d'informations peut être effectuée par le terminal TERP.

Dans une variante, on peut prévoir l'envoi au terminal TER d'une clé pouvant être à usage unique et permettant à l'utilisateur U du terminal TER d'accéder aux données d'informations, via une plateforme de stockage. Par exemple, la plateforme de service peut transmettre une requête à la plateforme de stockage, pour autoriser un accès aux données d'informations qui sont ensuite présentées à l'utilisateur U du terminal TER dans un navigateur de son terminal TER par exemple.

On a décrit ci-avant une application d'une telle réalisation à la gestion d'une urgence, notamment médicale. Bien entendu, d'autres applications sont possibles. Par exemple, il peut être prévu une application dans laquelle l'identité d'un enfant et d'une personne l'accompagnant est vérifiée par une mise en oeuvre de la réalisation décrite en référence à la figure 4. Dans une telle application, une plateforme de service vérifie l'identité de la personne accompagnant l'enfant par une authentification forte sur le terminal de cette personne. D'autres applications sont encore possibles : par exemple la lecture par le terminal TER d'un motif de type flash code, cette lecture pouvant donner droit à un service particulier (entrée dans un cinéma, un théâtre ou autre). Dans une telle application, la lecture du flash code permet de se connecter à une plateforme avec un identifiant de service et, suite à une validation de l'identité du porteur du terminal TER, le porteur peut accéder au service.

Bien entendu, la présente invention ne se limite pas à la forme de réalisation décrite ci-avant à titre d'exemple. Elle s'étend à d'autres variantes.

Par exemple, on a décrit ci-avant une pluralité de serveurs et une plateforme pour mettre en oeuvre l'étape courante de vérification. Dans une réalisation possible, ces différents éléments peuvent être regroupés auprès d'une même plateforme de service, par exemple.

En outre, on a décrit ci-avant la réception de l'identité dérivée auprès du terminal à l'issue de la phase initiale d'enrôlement. On indique toutefois qu'une variante peut consister à exécuter une application préexistante auprès du terminal pour générer l'identité dérivée et la stocker en relation avec un service donné, puis éventuellement la communiquer à un serveur d'association, lié au service.

## Revendications

1. Procédé pour vérifier une identité d'un utilisateur, comportant :
- une étape préalable (INIT) d'enrôlement d'un terminal de l'utilisateur, comprenant :
une lecture (LEC) d'un composant de sécurité d'un support (SO) d'identité de l'utilisateur afin de fournir une donnée d'identité authentique de l'utilisateur portée par le support d'identité, et
une transformation de la donnée d'identité authentique pour obtenir une identité dérivée, l'identité dérivée étant déterminée par une combinaison entre :
- la donnée d'identité authentique de l'utilisateur, et
- une donnée du terminal, permettant d'identifier le terminal ;
un stockage de l'identité dérivée dans des moyens de stockage (ES, MEM) du terminal, en correspondance avec une donnée propre à l'utilisateur, et
- une étape courante (VERIF), mise en oeuvre à chaque vérification de l'identité de l'utilisateur auprès du terminal, comprenant une authentification forte basée sur l'identité dérivée stockée et sur la donnée propre à l'utilisateur stockée,
l'identité dérivée, stockée dans les moyens de stockage (ES, MEM) du terminal, étant transmise du terminal vers une entité de vérification distante du terminal, et vérifiée par ladite entité (S24), l'identité dérivée stockée dans le terminal étant transmise à l'entité distante de vérification si une concordance entre la donnée propre à l'utilisateur stockée et une donnée propre à l'utilisateur saisie par l'utilisateur au moyen du terminal est vérifiée.

2. Procédé selon la revendication 1, **caractérisé en ce que** l'étape préalable (INIT) d'enrôlement comporte une association entre :
- la donnée d'identité authentique de l'utilisateur, et
- une donnée de terminal,
ladite association étant mémorisée avec des données de contact du terminal via un réseau auquel est connecté le terminal.

3. Procédé selon l'une des revendications précédentes, **caractérisé en ce que** l'étape courante (VERIF) de vérification d'identité de l'utilisateur, comprend :
* à partir des données de contact du terminal via un réseau auquel le terminal est connecté, un contact du terminal via ledit réseau pour déclencher auprès du terminal une interrogation de l'utilisateur pour demander à l'utilisateur de saisir ladite donnée propre à l'utilisateur,
* une vérification par le terminal de ladite donnée saisie, propre à l'utilisateur,
* la vérification de la donnée propre à l'utilisateur saisie étant positive, une vérification de l'identité dérivée stockée,
* et, la vérification de l'identité dérivée étant positive, une validation de la vérification d'identité de l'utilisateur.

4. Procédé selon l'une des revendications précédentes, dans lequel ladite identité dérivée est stockée dans des moyens de stockage d'un élément de sécurité (ES) du terminal.

5. Procédé selon la revendication 1, dans lequel la mémorisation d'association est mise en oeuvre auprès d'un module d'association (S-As), distant du terminal.

6. Procédé selon l'une des revendications précédentes, dans lequel l'identité dérivée est transmise au terminal par une technique de type « Over-The-Air » conjointement avec des données d'une application s'exécutant auprès du terminal au moins pour commander le stockage de l'identité dérivée (IS).

7. Procédé selon la revendication 6, dans lequel la transmission de l'identité dérivée est effectuée via une plateforme (PF-OP) d'un opérateur de réseau de communication auquel est relié le terminal.

8. Procédé selon la revendication 5, dans lequel l'entité distante comporte un module d'authentification (S-Aut) coopérant avec au moins ledit module d'association (S-As) pour contrôler l'identité dérivée reçue du terminal pendant l'étape courante.

9. Procédé selon la revendication 8, dans lequel :
- pendant ladite étape préalable :
* le terminal transmet à un module d'association (S-As), distant du terminal, une donnée de terminal avec la donnée d'identité authentique de l'utilisateur,
* le module d'association détermine une identité dérivée, et communique ladite identité dérivée au terminal,
* sur réception de l'identité dérivée, le terminal exécute une application :
. d'enregistrement de l'identité dérivée et
. de présentation d'une interface à l'utilisateur, pour l'enregistrement d'une donnée propre à l'utilisateur,
- pendant ladite étape courante :
* sur un équipement connecté (EQ) pour une transmission sécurisée de données, l'équipement demande à l'utilisateur une donnée de contact du terminal via une interface homme/machine de l'équipement connecté, et l'équipement transmet ladite donnée de contact à une entité de vérification, distante du terminal,
* l'entité de vérification distante contacte le terminal pour lancer une application auprès du terminal, déclenchant les opérations :
. demander à l'utilisateur de saisir la donnée propre à l'utilisateur via une interface homme/machine du terminal (S23), et
. la vérification de la donnée propre à l'utilisateur étant positive, transmettre l'identité dérivée depuis le terminal vers l'entité de vérification,
* en cas de succès dans une vérification de l'identité dérivée auprès de l'entité de vérification (S24), l'entité de vérification valide la vérification d'identité de l'utilisateur pour autoriser une transmission de données via l'équipement connecté.

10. Procédé selon la revendication 8, dans lequel, pendant ladite étape préalable :
* le module d'association vérifie ladite information d'identité auprès d'un module de gestion d'identité (S-GO), et
* en cas de vérification positive, le module d'association détermine une identité dérivée, et communique ladite identité dérivée au terminal.

11. Procédé selon l'une des revendications précédentes, dans lequel un identifiant (ID) est transmis avec une donnée de contact du terminal (TER) via un réseau à une plateforme de service, et si la vérification d'identité est positive à l'étape courante, l'utilisateur est autorisé à accéder à des données d'informations, fonction dudit identifiant (ID).

12. Procédé selon la revendication 11, dans lequel le terminal (TER) reçoit, par interaction avec un objet communiquant, une donnée d'accès à un service (ID-TR) encodant ledit identifiant (ID).

13. Procédé selon la revendication 12, dans lequel l'objet communiquant est un deuxième terminal (TERP) à disposition d'un deuxième utilisateur (P), et apte à communiquer avec le premier terminal (TER) enrôlé au cours de ladite étape préalable.

14. Procédé selon l'une des revendications 11 à 13, dans lequel les données d'informations comportent au moins des données propres à un utilisateur (P) de l'objet communiquant.

15. Procédé selon l'une des revendications 11 à 14, dans lequel ledit identifiant (ID) est transmis à une plateforme de service (PF-S), ladite plateforme de service vérifie ledit identifiant (ID) et autorise un accès auxdites données d'informations si la vérification dudit identifiant (ID) est positive.

16. Procédé de sécurisation d'une transmission de données, entre un équipement (EQ) et une plateforme de service (PF-S), comportant une vérification d'identité d'un utilisateur de l'équipement selon les étapes d'un procédé selon l'une des revendications précédentes, le procédé de sécurisation comportant :
- une transmission des données de contact du terminal à la plateforme de service,
- la mise en oeuvre de l'étape courante de vérification d'identité à partir du terminal de l'utilisateur, et
- la vérification d'identité étant positive, une étape pour autoriser une transmission de données entre l'équipement et la plateforme de service.

17. Programme informatique comportant des instructions pour la mise en oeuvre d'un procédé selon l'une des revendications précédentes, lorsque ce programme est exécuté par un processeur.

18. Terminal configuré pour la mise en oeuvre d'un procédé de vérification d'une identité d'un utilisateur selon l'une des revendications 1 à 16, comportant
- des moyens de stockage (ES, MEM) pour stocker une identité dérivée d'au moins une donnée d'identité authentique de l'utilisateur en correspondance avec une donnée propre à l'utilisateur, ladite donnée d'identité authentique de l'utilisateur étant fournie par lecture d'un composant de sécurité d'un support (SO) d'identité de l'utilisateur, et
- des instructions de programme informatique pour, lorsque lesdites instructions sont exécutées par un processeur du terminal, sur sollicitation par une entité distante de vérification de ladite identité dérivée:
- animer une interface homme/machine pour demander à l'utilisateur de saisir ladite donnée propre à l'utilisateur, puis vérifier une concordance de la donnée propre saisie avec la donnée propre stockée,
- transmettre l'identité dérivée stockée à l'entité distante pour vérification.

19. Système de vérification configuré pour la mise en oeuvre au moins de l'étape courante d'un procédé selon l'une des revendications 1 à 16, comportant des moyens :
- de contact du terminal, via le réseau (RE) précité pour déclencher auprès du terminal une interrogation de l'utilisateur,
- de réception et de vérification de l'identité dérivée (S-Aut, S-As), reçue du terminal, et
- les vérifications de l'identité dérivée et de la donnée propre à l'utilisateur étant positives, de validation de vérification d'identité de l'utilisateur.

## Patentansprüche

1. Verfahren zur Überprüfung einer Identität eines Benutzers, umfassend:
- einen vorherigen Schritt (INIT) der Erfassung eines Endgeräts des Benutzers, umfassend:
ein Ablesen (LEC) einer Sicherheitskomponente eines Identitätsträgers (SO) des Benutzers, um eine authentische Identitätsangabe des Benutzers, die von dem Identitätsträger getragen wird, zu liefern, und
eine Umwandlung der authentischen Identitätsangabe, um eine abgeleitete Identität zu erhalten, wobei die abgeleitete Identität bestimmt wird durch eine Kombination zwischen:
- der authentischen Identitätsangabe des Benutzers, und
- einer Angabe des Endgeräts, die es ermöglicht, das Endgerät zu identifizieren;
ein Speichern der abgeleiteten Identität in Speichermitteln (ES, MEM) des Endgeräts in Entsprechung mit einer dem Benutzer eigenen Angabe, und
- einen laufenden Schritt (VERIF), der bei jeder Überprüfung der Identität des Benutzers beim Endgerät eingesetzt wird, umfassend eine starke Authentifizierung basierend auf der gespeicherten abgeleiteten Identität und auf der dem Benutzer eigenen gespeicherten Angabe,
wobei die abgeleitete Identität, die in den Speichermitteln (ES, MEM) des Endgeräts gespeichert ist, von dem Endgerät zu einer vom Endgerät entfernten Überprüfungseinheit übertragen und von der Einheit (S24) überprüft wird,
wobei die in dem Endgerät gespeicherte abgeleitete Identität an die entfernte Überprüfungseinheit übertragen wird, wenn eine Übereinstimmung zwischen der dem Benutzer eigenen gespeicherten Angabe und einer dem Benutzer eigenen Angabe, die vom Benutzer mit Hilfe des Endgeräts eingegeben wird, überprüft ist.

2. Verfahren nach Anspruch 1, **dadurch gekennzeichnet, dass** der vorherige Schritt (INIT) der Erfassung eine Zuordnung umfasst zwischen:
- der authentischen Identitätsangabe des Benutzers, und
- einer Endgerätangabe,
wobei die Zuordnung mit Kontaktangaben des Endgeräts über ein Netzwerk, an das das Endgerät angeschlossen ist, gespeichert wird.

3. Verfahren nach einem der vorhergehenden Ansprüche, **dadurch gekennzeichnet, dass** der laufende Schritt (VERIF) der Überprüfung der Identität des Benutzers umfasst:
* auf Basis der Kontaktangaben des Endgeräts über ein Netzwerk, an das das Endgerät angeschlossen ist, einen Kontakt des Endgeräts über das Netzwerk, um bei dem Endgerät eine Abfrage des Benutzers auszulösen, um den Benutzer aufzufordern, die dem Benutzer eigene Angabe einzugeben,
* eine Überprüfung der dem Benutzer eigenen eingegebenen Angabe durch das Endgerät,
* wenn die Überprüfung der dem Benutzer eigenen eingegebenen Angabe positiv ist, eine Überprüfung der gespeicherten abgeleiteten Identität,
* und wenn die Überprüfung der abgeleiteten Identität positiv ist, eine Validierung der Überprüfung der Identität des Benutzers.

4. Verfahren nach einem der vorhergehenden Ansprüche, bei dem die abgeleitete Identität in Speichermitteln eines Sicherheitselements (ES) des Endgeräts gespeichert ist.

5. Verfahren nach Anspruch 1, bei dem die Zuordnungsspeicherung bei einem vom Endgerät entfernten Zuordnungsmodul (S-As) eingesetzt wird.

6. Verfahren nach einem der vorhergehenden Ansprüche, bei dem die abgeleitete Identität an das Endgerät durch eine Technik vom Typ "Over-The-Air" gemeinsam mit Angaben einer Anwendung, die bei dem Endgerät ausgeführt wird, um zumindest die Speicherung der abgeleiteten Identität (IS) zu steuern, übertragen wird.

7. Verfahren nach Anspruch 6, bei dem die Übertragung der abgeleiteten Identität über eine Plattform (PF-OP) eines Betreibers eines Kommunikationsnetzwerks, an das das Endgerät angeschlossen ist, erfolgt.

8. Verfahren nach Anspruch 5, bei dem die entfernte Einheit ein Authentifizierungsmodul (S-Aut) umfasst, das mit mindestens dem Zuordnungsmodul (S-As) zusammenwirkt, um die von dem Endgerät während des laufenden Schritts erhaltene abgeleitete Identität zu kontrollieren.

9. Verfahren nach Anspruch 8, bei dem:
- während des vorherigen Schritts:
* das Endgerät an ein von dem Endgerät entferntes Zuordnungsmodul (S-As) eine Endgerätangabe mit der authentischen Identitätsangabe des Benutzers überträgt,
* das Zuordnungsmodul eine abgeleitete Identität bestimmt und die abgeleitete Identität an das Endgerät mitteilt,
* bei Empfang der abgeleiteten Identität das Endgerät eine Anwendung ausführt:
Aufzeichnung der abgeleiteten Identität und
Präsentation einer Schnittstelle für den Benutzer für die Aufzeichnung einer dem Benutzer eigenen Angabe,
- während des laufenden Schritts:
* auf einer angeschlossenen Ausrüstung (EQ) für eine sichere Angabenübertragung die Ausrüstung vom Benutzer die Kontaktangabe des Endgeräts über eine Mensch/Maschine-Schnittstelle der angeschlossenen Ausrüstung fordert, und die Ausrüstung die Kontaktangabe an eine von dem Endgerät entfernte Überprüfungseinheit überträgt,
* die entfernte Überprüfungseinheit das Endgerät kontaktiert, um eine Anwendung bei dem Endgerät zu starten, die die folgenden Vorgänge auslöst:
• Aufforderung des Benutzers, die dem Benutzer eigene Angabe über eine Mensch/Maschine-Schnittstelle des Endgeräts (S23) einzugeben, und
• wenn die Überprüfung der dem Benutzer eigenen Angabe positiv ist, Übertragung der abgeleiteten Identität vom Endgerät zu der Überprüfungseinheit,
* im Falle einer erfolgreichen Überprüfung der abgeleiteten Identität bei der Überprüfungseinheit (S24) validiert die Überprüfungseinheit die Identitätsprüfung des Benutzers, um eine Übertragung von Angaben über die angeschlossene Ausrüstung zu gestatten.

10. Verfahren nach Anspruch 8, bei dem während des vorherigen Schritts:
* das Zuordnungsmodul die Identitätsinformation bei einem Identitätsverwaltungsmodul (S-GO) überprüft, und
* im Falle einer positiven Überprüfung das Zuordnungsmodul eine abgeleitete Identität bestimmt und die abgeleitete Identität an das Endgerät mitteilt.

11. Verfahren nach einem der vorhergehenden Ansprüche, bei dem ein Identifikator (ID) mit einer Kontaktangabe des Endgeräts (TER) über ein Netzwerk an eine Dienstleistungsplattform übertragen wird, und wenn die Identitätsüberprüfung im laufenden Schritt positiv ist, der Benutzer autorisiert wird, auf Informationsangaben in Abhängigkeit vom Identifikator (ID) zuzugreifen.

12. Verfahren nach Anspruch 11, bei dem das Endgerät (TER) durch Interaktion mit einem kommunizierenden Objekt eine Zugangsangabe zu einer Dienstleistung (ID-TR), die den Identifikator (ID) codiert, erhält.

13. Verfahren nach Anspruch 12, bei dem das kommunizierende Objekt ein zweites Endgerät (TERP) ist, das einem zweiten Benutzer (P) zur Verfügung steht und geeignet ist, mit dem ersten Endgerät (TER) zu kommunizieren, das während des vorherigen Schritts erfasst wurde.

14. Verfahren nach einem der Ansprüche 11 bis 13, bei dem die Informationsangaben mindestens Angaben, die einem Benutzer (P) des kommunizierenden Objekts eigen sind, umfassen.

15. Verfahren nach einem der Ansprüche 11 bis 14, bei dem der Identifikator (ID) an eine Dienstleistungsplattform (PF-S) übertragen wird, die Dienstleistungsplattform den Identifikator (ID) überprüft und einen Zugang zu den Informationsangaben gestattet, wenn die Überprüfung des Identifikators (ID) positiv ist.

16. Verfahren zur Sicherung einer Angabenübertragung zwischen einer Ausrüstung (EQ) und einer Dienstleistungsplattform (PF-S), umfassend eine Identitätsüberprüfung eines Benutzers der Ausrüstung nach den Schritten eines Verfahrens nach einem der vorhergehenden Ansprüche, wobei das Sicherungsverfahren umfasst:
- eine Übertragung der Kontaktangaben von dem Endgerät zur Dienstleistungsplattform,
- den Einsatz des laufenden Schritts der Identitätsüberprüfung vom Endgerät des Benutzers aus, und
- wenn die Identitätsüberprüfung positiv ist, einen Schritt, um eine Angabenübertragung zwischen der Ausrüstung und der Dienstleistungsplattform zu gestatten.

17. Informatikprogramm, umfassend Anweisungen für den Einsatz eines Verfahrens nach einem der vorhergehenden Ansprüche, wenn dieses Programm von einem Prozessor ausgeführt wird.

18. Endgerät, das für den Einsatz eines Verfahrens zur Überprüfung einer Identität eines Benutzer nach einem der Ansprüche 1 bis 16 eingerichtet ist, umfassend:
- Speichermittel (ES, MEM), um eine abgeleitete Identität mindestens einer authentischen Identitätsangabe des Benutzers in Entsprechung mit einer dem Benutzer eigenen Angabe zu speichern, wobei die authentische Identitätsangabe des Benutzers durch Ablesen einer Sicherheitskomponente von einem Identitätsträger (SO) des Benutzers geliefert wird, und
- Informatikprogrammanweisungen, um, wenn die Anweisungen von einem Prozessor des Endgeräts ausgeführt werden, auf Verlangen von einer entfernten Einheit zur Überprüfung der abgeleiteten Identität:
- eine Mensch/Maschine-Schnittstelle zu betätigen, um den Benutzer aufzufordern, die dem Benutzer eigene Angabe einzugeben, dann eine Übereinstimmung der eingegebenen eigenen Angabe mit der gespeicherten eigenen Angabe zu überprüfen,
- die gespeicherte abgeleitete Identität an die entfernte Einheit zur Überprüfung zu übertragen.

19. Überprüfungssystem, das für den Einsatz mindestens des laufenden Schritts eines Verfahrens nach einem der Ansprüche 1 bis 16 eingerichtet ist, umfassend:
- Kontaktmittel des Endgeräts über das vorgenannte Netzwerk (RE), um bei dem Endgerät eine Abfrage des Benutzers auszulösen,
- Mittel zum Empfangen und Überprüfen der abgeleiteten Identität (S-Aut, S-As), die vom Endgerät empfangen wird, und
- wenn die Überprüfungen der abgeleiteten Identität und der dem Benutzer eigenen Angabe positiv sind, Mittel zur Validierung der Identitätsüberprüfung des Benutzers.

## Claims

1. Method for verifying an identity of a user, comprising:
- a preliminary step (INIT) of enrolling a terminal of the user, comprising:
a reading (LEC) of a security component of an identity medium (SO) of the user in order to provide an authenticated identity data item of the user that is carried by the identity medium, and
a transformation of the authenticated identity data item in order to obtain a derived identity, the derived identity being determined by a combination of:
- the authenticated identity data item of the user, and
- terminal data which enables identifying the terminal;
a storing of the derived identity in storage means (ES, MEM) of the terminal, mapped to a data item specific to the user, and
- a current step (VERIF), implemented at each verification of the identity of the user at the terminal, comprising a strong authentication based on the stored derived identity and on the stored data item specific to the user,
the derived identity, stored in the storage means (ES, MEM) of the terminal, being transmitted from the terminal to a verification entity remote from the terminal, and verified by said entity (S24),
the derived identity stored in the terminal being transmitted to the remote verification entity if a match is verified between the stored data item specific to the user and a data item specific to the user that is input by the user via the terminal.

2. Method according to claim 1, wherein the prior enrollment step (INIT) comprises an association between:
- the authenticated identity data item of the user, and
- terminal data,
said association being stored with data for contacting the terminal via a network to which the terminal is connected.

3. Method according to one of the preceding claims, wherein the current step (VERIF) of verifying the identity of the user comprises:
* using data for contacting the terminal via a network to which the terminal is connected, a contacting of the terminal via said network in order to cause the terminal to request the user to enter said data item specific to the user,
* a verification by the terminal of said entered data item specific to the user,
* the verification of the entered data item specific to the user being positive, a verification of the stored derived identity,
* and, the verification of the derived identity being positive, a validation of the identity verification of the user.

4. Method according to one of the preceding claims, wherein said derived identity is stored in storage means of a security element (ES) of the terminal.

5. Method according to claim 1, wherein the storing of the association is implemented in an association module (S-As), remote from the terminal.

6. Method according to one of the preceding claims, wherein the derived identity is transmitted to the terminal by an "Over-The-Air" type of technique, together with data from an application running on the terminal at least for ordering the storing of the derived identity (IS).

7. Method according to claim 6, wherein the transmission of the derived identity is performed via a platform (PF-OP) of a communications network operator to which the terminal is connected.

8. Method according to claim 5, wherein the remote entity comprises an authentication module (S-Aut) cooperating with at least said association module (S-As) in order to verify the derived identity received from the terminal during the current step.

9. Method according to claim 8, wherein:
- during said preliminary step:
* the terminal transmits to an association module (S-As), remote from the terminal, terminal data with the authenticated identity data item of the user,
* the association module determines a derived identity, and communicates said derived identity to the terminal,
* upon receiving the derived identity, the terminal executes an application:
. to store the derived identity and
. to present an interface to the user, for storing a data item specific to the user,
- during said current step:
* on a connected device (EQ) for the secure transmission of data, the device requests contact data for the terminal, from the user, via a human/machine interface of the connected device, and the device transmits said contact data to a verification entity, remote from the terminal,
* the remote verification entity contacts the terminal in order to launch an application on the terminal, triggering operations:
. requesting the user to enter the data item specific to the user, via a human/machine interface of the terminal (S23), and
. the verification of the data item specific to the user being positive, transmitting the derived identity from the terminal to the verification entity,
* in the case of a successful verification of the derived identity at the verification entity (S24), the verification entity validates the identity verification of the user to allow transmission of data via the connected device.

10. Method according to claim 8, wherein during said preliminary step:
* the association module verifies said identity information in an identity management module (S-GO), and
* in the case of a positive verification, the association module determines a derived identity, and communicates said derived identity to the terminal.

11. Method according to one of the preceding claims, wherein an identifier (ID) is transmitted with contact data for the terminal (TER) via a network to a service platform, and if the identity verification is positive in the current step, the user is authorized to access information data on the basis of said identifier (ID).

12. Method according to claim 11, wherein the terminal (TER) receives, by interaction with a communicating object, access data for a service (ID-TR) encoding said identifier (ID).

13. Method according to claim 12, wherein the communicating object is a second terminal (TERP) available to a second user (P), and able to communicate with the first terminal (TER) enrolled during said preliminary step.

14. Method according to one of claims 11 to 13, wherein the information data comprise at least some data items specific to a user (P) of the communicating object.

15. Method according to one of claims 11 to 14, wherein said identifier (ID) is transmitted to a service platform (PF-S), and said service platform verifies said identifier (ID) and allows access to said information data if the verification of said identifier (ID) is positive.

16. Method for securing a data transmission between a device (EQ) and a service platform (PF-S), comprising an identity verification of a user of the device according to the steps of a method according to one of the preceding claims, the method for securing comprising:
- a transmission of contact data for the terminal to the service platform,
- the implementation of the current step of identity verification from the user's terminal, and
- the identity verification being positive, a step to authorize a transmission of data between the device and the service platform.

17. Computer program comprising instructions for implementing a method according to one of the preceding claims, when the program is executed by a processor.

18. Terminal configured for implementing a method for verifying an identity of a user according to one of claims 1 to 16, comprising
- storage means (ES, MEM) for storing an identity derived from at least one authenticated identity data item of the user mapped to a data item specific to the user, said authenticated identity data item of the user being provided by the reading of a security component of an identity medium (SO) of the user, and
- computer program instructions for, when said instructions are executed by a processor of the terminal, upon request by a remote verification entity to verify said derived identity:
- causing a human/machine interface to ask the user to enter said data item specific to the user, then verifying a match between the entered data item specific to the user and the stored data item specific to the user,
- transmitting the derived identity to the remote entity for verification.

19. Verification system configured to implement at least the current step of a method according to one of claims 1 to 16, comprising means:
- for contacting the terminal, via the abovementioned network (RE), in order to cause the terminal to request information from the user,
- for receiving and verifying the derived identity (S-Aut, S-As), received from the terminal, and
- the verifications of the derived identity and of the data item specific to the user being positive, validating the identity verification of the user.
